# EUROPEAN PATENT SPECIFICATION

(11) **EP 0 931 684 B1**
(45) Date of publication and mention of the grant of the patent: **22.10.2003**
(21) Application number: 99200128.9
(22) Date of filing: 19.01.1999
(51) Int. Cl.: B60K 7/00, B60G 3/20

(54) **Electrically driven vehicle**
Elektrisch angetriebenes Fahrzeug
Véhicule à propulsion électrique

(30) Priority: 19.01.1998 NL 1008060
(43) Date of publication of application: 28.07.1999
(73) Proprietor: Advanced Public Transport Systems BV, 5555 XL Valkenswaard (NL)
(72) Inventor: Deelen, Cornelis Josephus Adrianus, 5712 JR Someren (NL)
(74) Representative: Verhees, Godefridus Josephus Maria

(56) References cited:
- DE-A- 3 924 828
- DE-U- 29 516 772
- FR-A- 2 131 643
- FR-A- 2 723 887
- US-A- 3 347 333
- US-A- 3 812 928
- US-A- 4 802 688

## Description

### Field of the invention

The invention relates to a vehicle comprising a number of driven wheels each of which is supported on bearings in a housing that is connected to the rest of the vehicle via supporting arms of a wheel suspension which comprises a yoke that is connected with the housing whereby an end of each supporting arm is connected in a hinged manner to the yoke. Wheel suspensions in which the wheel is fastened to the vehicle by supporting arms are utilized for vehicles in which the wheels must have a broad range of motion in order, for example, to compensate for a very uneven road and/or very sharp curves.

Since in the interest ofthe environment electrical drive systems are becoming increasingly desirable, more and more types of vehicles are being designed with electrical drive systems.

### Prior art

A vehicle of the type as described in the preamble is known from the American patent specification US 4.802.688. In that vehicle the ends of the supporting arms of the wheel suspension are connected in a hinged manner with the housing in which the wheel shaft rests on bearings. The other ends of the supporting arms are connected with hinges to the vehicle.

### Summary of the invention

An objective of the invention is to produce a vehicle of the type as described in the preamble in which the driven wheels are electrically driven and in which the suspension and the drive of the wheels is compact and the unsprung weight is low. To this end the vehicle according to the invention is characterized by the fact that each driven wheel is connected to an electric motor via a drive shaft and a transmission, whereby at least the electric motor is at a distance from the housing and fastened to the body of the vehicle, and whereby the electric motor and the transmission are present in or near a space present in the vehicle for the wheel suspension. An additional advantage of this structure is that the electrical cables and possible cooling water hoses no longer need to move along with the wheel in terms of the body of the vehicle. The electric motor can be fastened directly or via auxiliary elements to the wheel housing.

Preferably both the electric motor and the transmission are at a distance from the housing and are located beside each other and are each fastened directly to the body of the vehicle. In this way the construction requires minimal installation space.

From FR-A-2 131 643 a drive device is known in which an electric motor and a transmission are beared in the rim of the driven wheel. Both the electric motor and the transmission are unsprung.

One embodiment of the vehicle according to the invention is characterized by the fact that the yoke of the wheel suspension is connected in two places in a hinged manner with the housing, so that the housing forms a stub axle. This makes the wheel suspension also suitable for steerable wheels. An additional advantage of a yoke is the virtually vertical motion ofthe yoke at spring movements. So if an air spring bellows is used this would be less subject to wear and tear.

Another advantage of using a yoke is that in the connection with the housing it is not necessary for ball hinges to be used. So an advantageous embodiment is characterized by the fact that each connection of the yoke with the housing contains a bush containing a swivel pin, with the possibility of the swivel pin and the bush being turned in relation to each other, and with the swivel pin being fastened to the housing or the yoke and the bush being fastened either in the yoke or in the housing.

Another embodiment is characterized by the fact that the yoke is C-shaped, such that the top end of the yoke, when there is a wheel on the wheel shaft, is located above the wheel and the uppermost supporting arm is connected in a hinged manner with this end. By this placement of the uppermost supporting arm, the interior space in the vehicle between the wheels is considerably greater and the floor height in the interior between the wheels can remain low in comparison with the rest of the vehicle, so that the passengers can move freely in and out of the vehicle.

Another embodiment associated with the previous one is characterized by the fact that, if the wheel suspension is built into a vehicle, the lower supporting arm, under the floor surface of the vehicle, is connected with the body of the vehicle. Preferably here the undermost supporting arm is connected with the vehicle near an imaginairy vertical longitudinal surface through the middle of the vehicle.

To simplify the assembly and disassembly of the wheel suspension another embodiment is characterized by the fact that the yoke consists of at least two parts that are connected with each other such that they can be taken apart. Preferably the yoke is divided near the hinge point of the undermost supporting arm.

Another embodiment is characterized by the fact that the vehicle comprises a subframe to which the supporting arms are hingedly connected with an end. For this reason the assembly of the wheel suspension can be done independently of the assembly of the vehicle for which the wheel suspension is intended, which may be efficient in terms of assembly. In addition using a subframe can contribute to the structure of the vehicle in terms of strength and rigidity.

### Brief description of the drawings

The invention will be elucidated more fully below by means of drawings in which an embodiment of the vehicle according to the invention is shown. In these drawings:
Figure 1 shows a cross section of a wheel suspension and a drive of an embodiment of the vehicle according to the invention;
Figure 2 shows a top view of the wheel suspension and drive shown in figure 1; and
Figure 3 shows a side view of the wheel suspension and drive shown in figure 1.

### Detailed description of the drawings

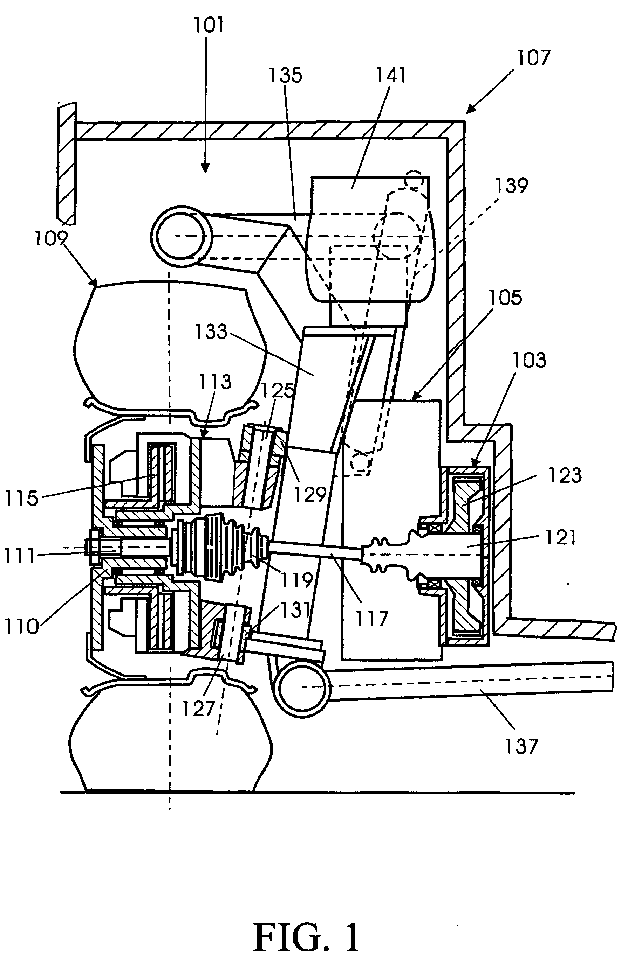

Figure 1 shows a cross section of a wheel suspension 101 with a drive of an embodiment of the vehicle according to the invention. The vehicle comprises a transmission 103 and an electric motor 105 which are each fastened directly against a wheel housing 107. The wheel suspension 101 is built into a wheel housing of the vehicle. The wheel suspension 101 has a wheel 109 with a rim upon which a tyre is present. The rim is attached via a wheel hub 110 on a wheel shaft 111. The wheel shaft 111 is supported on bearings in a housing 113. In this embodiment the housing 113 is the stub axle of the wheel suspension. A brake disc 115 is fastened to the wheel hub 110. The wheel shaft 111 is coupled to the wheel hub 110. The wheel shaft 111 is coupled with the transmission 103 via a drive shaft 117. The coupling between the drive shaft 117 on the one hand and the wheel shaft 111 respectively the transmission 103 on the other is established by two homokinetic couplings 119 and 121.

The transmission 103 is located against the wheel housing 107 and the coupling 121 can be integrated into a gear 123 so as to be able to use a relatively long drive shaft 117, allowing broad spring movements where there are only small angle differences in the drive shaft. Two swivel pins 125 and 127 are fastened to the housing 113 around which bushes 129 and 131 can revolve. These bushes are fastened to a C-shaped yoke 133 that is suspended in the vehicle via supporting arms 135 and 137. Between the yoke 133 and the wheel housing 107 there is a shock absorber 139 and an air spring bellows 141.

The top end of the yoke 133 is located above the wheel 109 and is suspended to the vehicle via the upper supporting arms 135. These supporting arms 135 are hinged with an end to the yoke 133 and with the other end to the vehicle. On the underside the yoke 133 is suspended via the lower supporting arms 137 to the vehicle. These supporting arms 137 are hinged with an end to the yoke 133 and with another end to the body of the vehicle under the floor surface near an imaginairy vertical longitudinal surface through the middle of the vehicle. The yoke 133 is divided into two parts near the hinge point with the lower supporting arm 137.

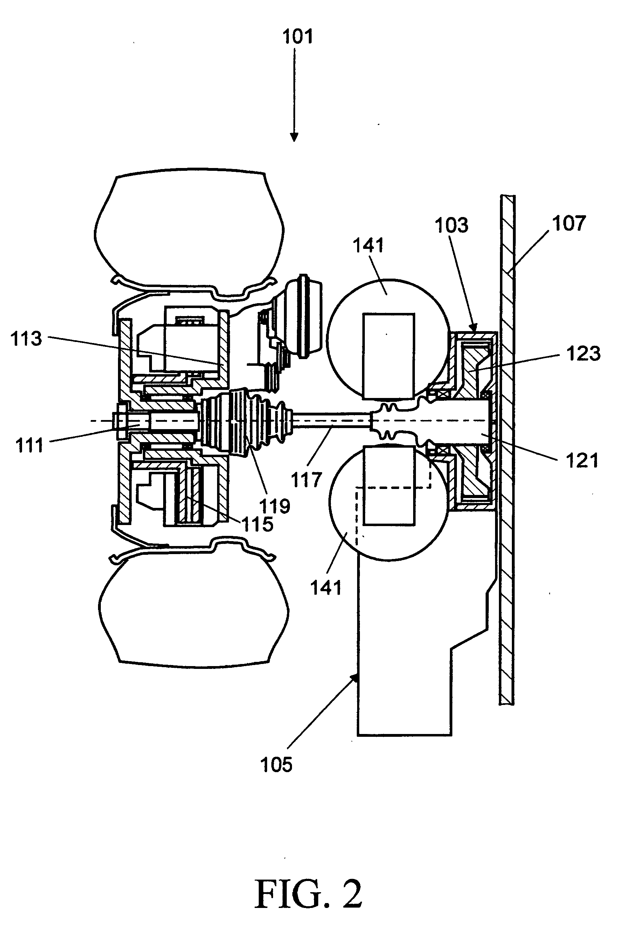

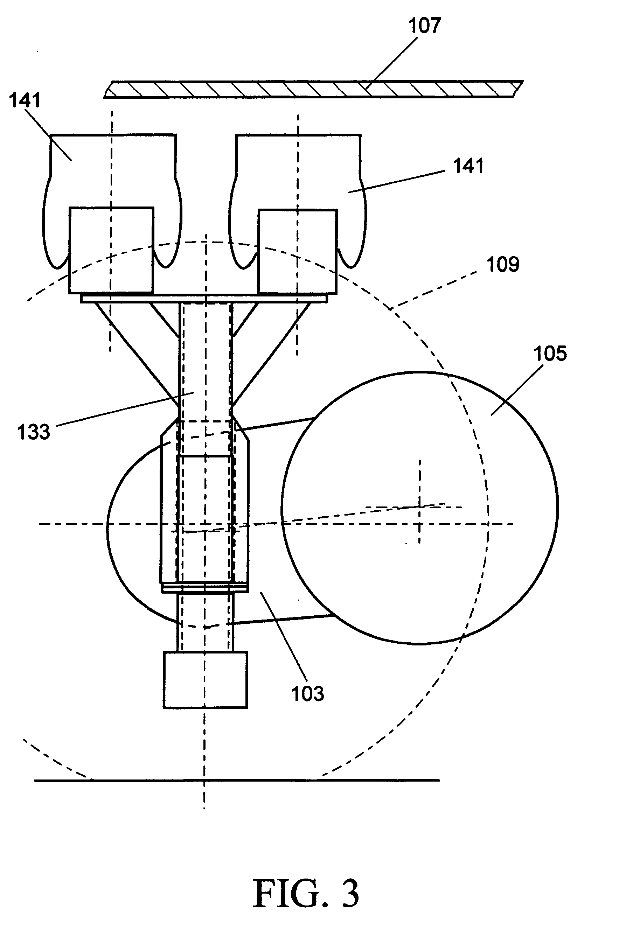

Figure 2 shows a top view of the wheel suspension 101 with drive shown in figure 1. For purposes of clarity the yoke and the supporting arms of the suspension are not shown here. The electric motor 105 is located beside the transmission 103 which is shown more clearly in figure 3. By fastening the transmission 103 and the electric motor 105 against the wheel housing 107 one has more structural freedom than if these were integrated into the housing 113 of the wheel shaft 111. In addition a simpler gear transmission can be utilized than a double planetary gearing. In figure 3 the wheel 109 is shown, for purposes of clarity, by a broken line.

Although above the invention is elucidated on the basis of the drawings, it should be established that the invention is in no way limited to the embodiment shown in the drawings. The invention also extends to all embodiments deviating from the embodiment shown in the drawings within the context defined by the claims. For example the vehicle can also comprise a subframe to which the supporting arms are connected with a hinge at the end. The subframe can then, in its turn, be attached to the body of the vehicle rather than the supporting arms being directly connected to the body of the vehicle.

## Claims

1. Vehicle comprising a number of driven wheels (109) each of which is supported on bearings in a housing (113) that is connected to the rest of the vehicle via supporting arms (135, 137) of a wheel suspension (101) which comprises a yoke (133) that is connected with the housing (113) whereby an end of each supporting arm (135, 137) is connected in a hinged manner to the yoke (133), **characterized in that** each driven wheel (109) is connected to an electric motor (105) via a drive shaft (117) and a transmission (103), whereby at least the electric motor (105) is at a distance from the housing (113) and fastened to the body of the vehicle, and whereby the electric motor (105) and the transmission (103) are present in or near a space present in the vehicle for the wheel suspension (101).

2. Vehicle according to claim 1, **characterized in that** both the electric motor (105) and the transmission (103) are at a distance from the housing (113) and are located beside each other and are each fastened directly to the body of the vehicle.

3. Vehicle according to claim 2, **characterized in that** the yoke (133) is hinged in two places to the housing (113), with the housing (113) forming a stub axle.

4. Vehicle according to claim 3, **characterized in that** each connection of the yoke (133) with the housing (113) comprises a bush (129, 131) with a swivel pin (125, 127) in it, whereby the swivel pin and the bush revolve with regard to each other, and in which the swivel pin (125,127) is fastened to the housing (113) or to the yoke (133) and the bush (129, 131) is fastened respectively in the yoke or in the housing.

5. Vehicle according to one of the preceding claims, **characterized in that** the yoke (133) is C-shaped, with the top end of the yoke, if there is a wheel on the wheel shaft, being located above the wheel (109) and the upper supporting arm (135) being hinged to this end.

6. Vehicle according to one of the preceding claims, **characterized in that**, if the wheel suspension is built into the vehicle, the lower supporting arm (137) is connected with the body of the vehicle under the floor of the vehicle.

7. Vehicle according to claim 6, **characterized in that** the lower supporting arm (137) is connected to the vehicle near an imaginairy vertical longitudinal surface through the middle of the vehicle.

8. Vehicle according to one of the preceding claims, **characterized in that** the yoke (133) consists of at least two parts connected to each other which can be taken apart.

9. Vehicle according to claim 8, **characterized in that** the yoke (133) is divided near the hinge point of the lower supporting arm (137) and the yoke (133).

10. Vehicle according to one of the preceding claims, **characterized in that** the vehicle comprises a subframe to which the supporting arms are hingedly connected with an end.

## Patentansprüche

1. Fahrzeug mit mehreren angetriebenen Rädern (109), von denen jedes in einem Gehäuse (113) gelagert ist, das mit dem Rest des Fahrzeugs über Lenker (135, 137) einer Radaufhängung (101) verbunden ist, die einen Tragrahmen (133) umfasst, der mit dem Gehäuse (113) verbunden ist, wobei die Lenker (135,137) auf einer Seite drehbar mit dem Tragrahmen (133) verbunden sind, **dadurch gekennzeichnet, dass** jedes der Antriebsräder (109) über eine Antriebswelle (117) und ein Getriebe (103) mit einem Elektromotor (105) verbunden ist, wobei sich zumindest der Elektromotor (105) im Abstand zu dem Gehäuse (113) befindet und an der Karosserie des Fahrzeugs befestigt ist, und wobei sich der Elektromotor (105) und das Getriebe (103) in einem für die Radaufhängung in dem Fahrzeug vorhandenen Raum (101) oder in dessen Nähe befinden.

2. Fahrzeug nach Anspruch 1, **dadurch gekennzeichnet, dass** sowohl der Elektromotor (105) als auch das Getriebe (103) im Abstand zu dem Gehäuse (113) nebeneinander angeordnet und direkt an der Karosserie des Fahrzeugs befestigt sind.

3. Fahrzeug nach Anspruch 2, **dadurch gekennzeichnet, dass** der Tragrahmen (133) an zwei Stellen drehbar mit dem Gehäuse (113) verbunden ist, wobei das Gehäuse (113) einen Achsschenkel bildet.

4. Fahrzeug nach Anspruch 3, **dadurch gekennzeichnet, dass** jede Verbindung des Tragrahmens (133) mit dem Gehäuse (113) eine Buchse (129, 131) mit einem darin befindlichen Achsschenkelbolzen (125, 127) umfasst, wobei der Achsschenkelbolzen und die Buchse drehbar zueinander gelagert sind und der Achsschenkelbolzen (125,127) an dem Gehäuse (113) oder an dem Tragrahmen (133) befestigt und die Buchse (129, 131) in dem Tragrahmen beziehungsweise in dem Gehäuse angebracht ist.

5. Fahrzeug nach einem der vorangegangenen Ansprüche, **dadurch gekennzeichnet, dass** der Tragrahmen (133) C-förmig ausgebildet ist, wobei sich dessen oberes Ende, wenn auf der Radachse ein Rad (109) angebracht ist, über dem Rad befindet und der obere Lenker (135) drehbar mit diesem Ende verbunden ist.

6. Fahrzeug nach einem der vorangegangenen Ansprüche, **dadurch gekennzeichnet, dass** der untere Lenker (137), wenn die Radaufhängung in ein Fahrzeug eingebaut ist, unterhalb der Bodenfläche des Fahrzeugs mit der Karosserie des Fahrzeugs verbunden ist.

7. Fahrzeug nach Anspruch 6, **dadurch gekennzeichnet, dass** der untere Lenker (137) in der Nähe der durch die Längsachse verlaufenden Mittelebene des Fahrzeugs mit dem Fahrzeug verbunden ist.

8. Fahrzeug nach einem der vorangegangenen Ansprüche, **dadurch gekennzeichnet, dass** der Tragrahmen (133) aus mindestens zwei Teilen besteht, die lösbar miteinander verbunden sind.

9. Fahrzeug nach Anspruch 8, **dadurch gekennzeichnet, dass** der Tragrahmen (133) in der Nähe des Gelenks, das den unteren Lenker (137) mit dem Tragrahmen (133) verbindet, teilbar ausgeführt ist.

10. Fahrzeug nach einem der vorangegangenen Ansprüche, **dadurch gekennzeichnet, dass** das Fahrzeug einen Hilfsrahmen umfasst, mit dem die Lenker an einem Ende drehbar verbunden sind.

## Revendications

1. Véhicule comprenant un certain nombre de roues propulsées (109), chacune étant placée sur roulement dans un boîtier (113) qui est relié au reste du véhicule par l'intermédiaire des bras de support (135, 137) d'une suspension des roues (101), laquelle suspension des roues comprend un joug (133) qui est relié au boîtier (113), les bras de support (135, 137) étant, à une extrémité, reliés au joug (133) au moyen d'une charnière, **caractérisé en ce que** chaque roue propulsée (109) est reliée à un moteur électrique (105) par l'intermédiaire d'un arbre moteur (117) et d'une transmission (103), pour lesquels au moins le moteur électrique (105) se trouve à distance du boîtier (113) et est fixé à la carrosserie du véhicule, et où le moteur électrique (105) et la transmission (103) se trouvent dans, ou près, d'un espace (101) disponible pour la suspension des roues dans le véhicule.

2. Véhicule selon la revendication 1, **caractérisé en ce qu'**aussi bien le moteur électrique (105) que la transmission (103) se trouvent à distance du boîtier (113) et côte à côte, et sont fixés directement à la carrosserie du véhicule.

3. Véhicule selon la revendication 2, **caractérisé en ce que** le joug (133) est relié en deux endroits au boîtier (113) au moyen d'une charnière, le boîtier (113) y formant une fusée.

4. Véhicule selon la revendication 3, **caractérisé en ce que** chaque jonction entre le joug (133) et le boîtier (113) comprend une douille (129, 131) et, présente dans cette dernière, un pivot de fusée (125, 127), où le pivot de fusée et la douille peuvent tourner l'une par rapport à l'autre, et où le pivot de fusée (125, 127) est fixée au boîtier (113) ou au joug (133), et la douille (129, 131) est fixée respectivement dans le joug ou dans le boîtier.

5. Véhicule selon une des revendications précédentes, **caractérisé en ce que** le joug (133) est en forme de C, pour lequel l'extrémité supérieure du joug se trouve, en présence d'une roue (109) sur l'essieu, au-dessus de la roue, et où le bras de support supérieur (135) est relié, au moyen d'une charnière, à cette extrémité.

6. Véhicule selon une des revendications précédentes, **caractérisé en ce que**, dans le cas où la suspension des roues serait intégrée dans un véhicule, le bras de support inférieur (137), sous la superficie au sol du véhicule, est relié à la carrosserie du véhicule.

7. Véhicule selon la revendication 6, **caractérisé en ce que** le bras de support inférieur (137) près de la surface centrale longitudinale du véhicule est relié au véhicule.

8. Véhicule selon une des revendications précédentes, **caractérisé en ce que** le joug (133) se compose d'au moins deux parties reliées l'une à l'autre et pouvant se démonter.

9. Véhicule selon la revendication 8, **caractérisé en ce que** le joug (133), près du point d'articulation entre le bras de support inférieur (137) et le joug (133), est divisé.

10. Véhicule selon une des revendications précédentes, **caractérisé en ce que** le véhicule comprend un sous-châssis auquel sont reliés les bras de support avec une extrémité à charnière.
